# EUROPÄISCHE PATENTANMELDUNG

(11) **EP 1 063 390 A2**
(43) Veröffentlichungstag der Anmeldung: **27.12.2000**
(21) Anmeldenummer: 00112173.0
(22) Anmeldetag: 07.06.2000
(51) Int. Cl.: F01D 11/06, F02C 6/12

(54) **Turbolader**

(30) Priorität: 24.06.1999 DE 19928925
(71) Anmelder: ABB Turbo Systems AG, 5400 Baden (CH)
(72) Erfinder: Laustela, Esko, 5503 Schafisheim (CH); Rohne, Karl-Heinz, Dr., 5234 Villigen (CH)
(74) Vertreter: ABB Patent Attorneys

(57) **Zusammenfassung**

Zur Sperrluftversorgung eines Turboladers (1), welcher eine Welle (2), einen an der Welle befestigten Verdichter (V₁), sowie einen an der Welle befestigtes Turbinenrad (T₁) enthält, wird ein Kleinturbolader (8) angeschlossen. Der Sperrluftdruck passt sich dem Turbineneintrittsdruck von selbst an.

## Beschreibung

### TECHNISCHES GEBIET

Bei der Erfindung handelt es sich um einen Turbolader gemäss dem Oberbegriff des Anspruchs 1.

### STAND DER TECHNIK

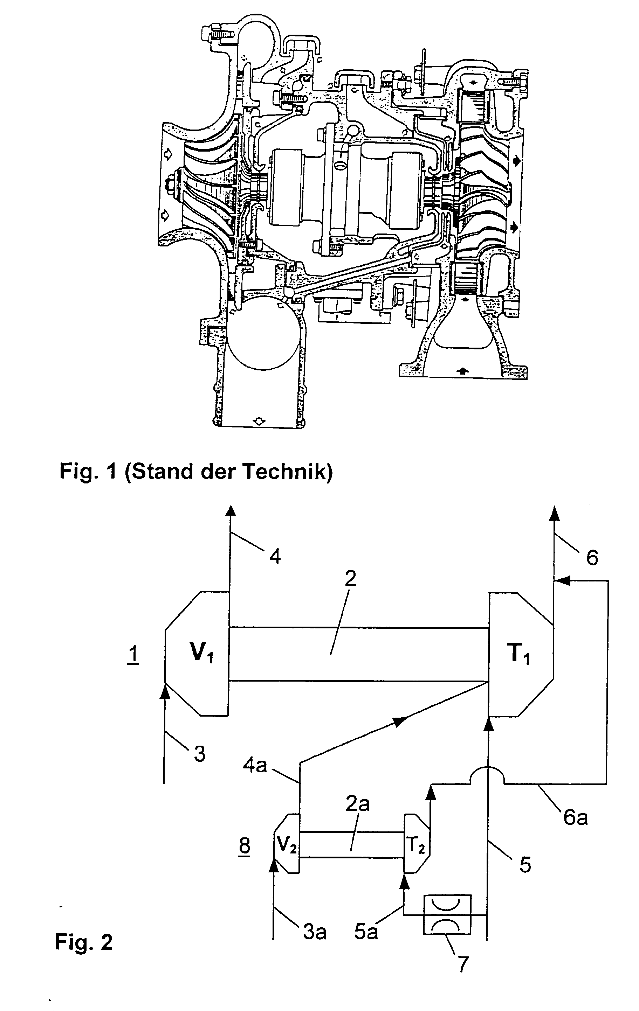

Beispielsweise aus dem Sonderdruck der Brown Boveri Mitteilungen Nr. 4/5 aus dem Jahre 1971 ist ein RR-Turbolader bekannt. Dieser Turbolader wird zum besseren Verständnis in der Figur 1 wiedergegeben. Der Turbolader ist aus einem Radialverdichter mit einem beschaufelten oder unbeschaufelten Diffusor und aus einer Radialturbine aufgebaut. Der Rotor des Turboladers besteht aus einer Welle, an welcher an dem einen Ende das Turbinenrad und an dem anderen Ende das Verdichterrad aufgesetzt ist. Im mittleren Teil des Gehäuses des Turboladers ist die Welle auf druckölgeschmierten Gleitlagern gelagert. Das Gehäuse kann beispielsweise ungekühlt oder wassergekühlt sein. Um zu verhindern, dass die Abgase in den Lagerraum eindringen, wird von der Verdichterseite her Sperrluft an die Turbinennabe geführt. Der Weg der dem Verdichter entnommenen Sperrluft ist in der Figur 1 mit weissen Pfeilen angedeutet. Durch diese Anordnung erreicht man zudem einen reduzierten Wärmefluss vom Turbinenrad durch die Welle zum Rotorlager. Die turbinenseitige Lagerung erhält durch die Versorgung mit Sperrluft keine höheren Temperaturen als die verdichterseitige Lagerung. Das Temperaturniveau stellt somit auch nach dem Abstellen des Motors kein Problem dar, so dass keine unerwünschte Verkokung des Schmieröls eintritt. Um im Lageraum keinen Überdruck zu erhalten sind die Räume auf beiden Seiten des Lageraums durch Kanäle mit der Atmosphäre verbunden. Das Lagergehäuse wird durch eine Zwischenwand, die durch die Sperrluft gekühlt ist, wirksam gegen die hohe Temperatur des Turbinenraums geschützt. Nachteilig wirkt sich diese Art der Sperrluftversorgung aber insbesondere dann aus, wenn zur Verdichterluft ein Gas gemischt wird, was beispielsweise bei der Verdichtung von Biogas auftreten kann. Dies kann dann zu explosionsfähigen Zusammensetzungen der Sperrluft führen, welche in der heissen Umgebung der Turbinennabe zünden. Eine direkte Entnahme der Sperrluft aus dem Verdichter wird somit verunmöglicht. Die mit dem Gas angereicherte Sperrluft sollte auch nicht in die Umwelt gelangen. Problematisch ist dies, da Fremdluft in der benötigten Menge häufig nicht vorhanden ist, und separate Kompressoren einen erheblichen Preisnachteil darstellen. Dies gilt insbesondere bei Turboladern mit variabler Geometrie (VTG), da diese einen erhöhten Sperrluftbedarf haben.

### DARSTELLUNG DER ERFINDUNG

Ziel der Erfindung ist es, diese Nachteile zu überwinden. Die Erfindung löst die Aufgabe, einen Turbolader zu schaffen, mit welchem es möglich ist, die Verdichterluft mit einem Gas anzureichern, ohne eine Explosionsgefahr bei der Sperrluft durch eine erhöhte Temperatur des Turbinenrades des Turboladers befürchten zu müssen. Zudem soll es aus Umweltschutzgründen vermieden werden, die mit dem Gasgemisch angereicherte Sperrluft an die Umgebung abzugeben. Erfindungsgemäss wird diese Aufgabe bei einem Turbolader gemäss dem Oberbegriff des Patentanspruchs 1 dadurch gelöst, dass ein Kleinturbolader, welcher eine Welle, einen an der Welle befestigen Verdichter mit einer Zuleitung und einer Ableitung und ein an der Welle befestigtes Turbinenrad mit einer Zuleitung und einer Ableitung enthält, so angeordnet ist, dass die Ableitung des Verdichters des Kleinturboladers zur Sperrluftversorgung des Turbinenrades des Turboladers angeschlossen ist.

Vorteilhaft kann zur Luft des Turboladers ein Gas gemischt werden, da die Sperrluftversorgung durch den Verdichter des Kleinturboladers erfolgt. In einer besonderen Ausführungsform handelt es sich um einen Turbolader mit variabler Geometrie, da dieser sich durch einen erhöhten Sperrluftverbrauch auszeichnet. Vorteilhaft passt sich mit der vorgeschlagenen Konfiguration der Sperrluftdruck des Turboladers an den Turbineneintrittsdruck von selbst an. Weiter ist es vorteilhaft möglich, die Zu- und Ableitungen des Kleinturbinenrades mit den Zu- und Ableitungen des Turbinenrades über eine allgemeine Regelung - ein druckminderndes Element wie beispielsweise eine Blende - zu verbinden.

### KURZE BESCHREIBUNG DER ZEICHNUNGEN

Es zeigen
- **Fig.1**: einen Turbolader, welcher aus dem Stand der Technik bekannt ist, mit herkömmlicher Sperrluftversorgung des Turbinenrades durch Luft aus dem Verdichter und
- **Fig.2**: einen erfindungsgemässen Turbolader mit der Verwendung eines Kleinturboladers für die Sperrluftversorgung des Turboladers.

Es sind nur die für die Erfindung wesentlichen Elemente dargestellt.

### WEG ZUR AUSFÜHRUNG DER ERFINDUNG

In der Figur 2 wird eine Ausführungsform eines erfindungsgemässen Turboladers 1 schematisch dargestellt. Der Turbolader 1 besteht prinzipiell, wie aus dem Stand der Technik bekannt, aus einer Welle 2, an deren einen Ende sich ein Verdichter V₁ und ein Turbinenrad T₁ befinden. Das Gehäuse, die Lagerungen und alle anderen aus dem Stand der Technik bekannten Dinge sind der Einfachheit halber fortgelassen. Der Verdichter V₁ ist mit einer Zuleitung 3 und einer Ableitung 4 verbunden, ebenso wie an das Turbinenrad T₁ eine Zuleitung 5 und eine Ableitung 6 angeschlossen ist. In einer besonderen Ausführungsform handelt es sich bei dem Turbolader um einen Turbolader mit veränderlichen Geometrie, da dieser sich durch eine erhöhte Sperrluftversorgung auszeichnet. Die Luft des Verdichters V₁ ist in dem gezeigten Ausführungsbeispiels mit einem Gas angereichert und kann aus diesem Grunde nicht als Sperrluftversorgung des Turbinenrades T₁ verwendet werden, da explosionsfähige Gasgemische entstehen können, welche sich in der Nähe des heissen Turbinenrades T₁ entzünden.

Erfindungsgemäss ist neben dem Turbolader 1 ein Kleinturbolader 8 angeordnet, welcher in der Figur 2 ebenfalls lediglich schematisch dargestellt ist. Dieser Kleinturbolader 8 besteht in seinem prinzipiellen Aufbau aus einer Welle 2a, an welcher ein Verdichter V₂ und ein Turbinenrad T₂ befestigt sind. Sowohl an dem Verdichter V₂ als auch an dem Turbinenrad T₂ sind Zu- und Ableitungen 3a,5a,4a,6a angeschlossen. Dabei sind die Zu- und Ableitung 5a,6a des Turbinenrades T₂ der Kleinturbine 8 jeweils mit der Zu- und der Ableitung 5,6 des Turbinenrades T1 des Turboladers 1 verbunden. Zur Regelung der Sperrluft ist in dem gezeigten Ausführungsbeispiel zwischen der Zuleitung 5 und Zuleitung 5a eine Blende 7 oder ein anderes druckminderndes Element angeordnet. Die Sperrluftversorgung des Turbinenrades T₁ des Turboladers 1 wird entsprechend der Figur 2 durch die Ableitung 4a des Verdichters V₂ des Kleinturboladers 8 betrieben. Die Sperrluft wird danach auf bekannte Weise an die Umwelt abgegeben, dies ist aber in der Figur 2 nicht dargestellt.

Diese Anordnung eines Kleinturboladers 8 als Sperrluftversorgung eines Turbinenrades eines Turboladers 1 hat verschiedene Vorteile. Die Sperrluft kann ohne Bedenken an die Umwelt abgegeben werden, da sie - im Gegensatz zur Verdichterluft des Verdichters V₁- keine Gaszumischung enthält. Ein weiterer Vorteil besteht darin, dass sich der Druck der Sperrluft in der in Figur 2 dargestellten Schaltung von selbst an den Turbineneintrittdruck anpasst.

### BEZUGSZEICHENLISTE

- **1**: Turbolader
- **2**: Welle von Turbolader 1
- **2a**: Welle von Kleinturbolader 8
- **3**: Zuleitung von Verdichter V₁
- **3a**: Zuleitung von Verdichter V₂
- **4**: Ableitung von Verdichter V₁
- **4a**: Ableitung von Verdichter V₂
- **5**: Zuleitung von Turbinenrad T₁
- **5a**: Zuleitung von Turbinenrad T₂
- **6**: Ableitung von Turbinenrad T₁
- **6a**: Ableitung von Turbinenrad T₂
- **7**: Blende
- **8**: Kleinturbolader
- **T**_{**1**}: Turbinenrad von Turbolader 1
- **T**_{**2**}: Turbinenrad von Kleinturbolader 8
- **V**_{**1**}: Verdichter von Turbolader 1
- **V**_{**2**}: Verdichter von Kleinturbolader 8

## Patentansprüche

1. Turbolader (1), welcher eine Welle (2), einen an der Welle (2) befestigten Verdichter (V₁) mit einer Zuleitung (3) und einer Ableitung (4), sowie ein an der Welle (2) befestigtes Turbinenrad (T₁) mit einer Zuleitung (5) und einer Ableitung (6), und eine Sperrluftversorgung des Turbinenrades (T₁) enthält,
dadurch gekennzeichnet, dass
die Sperrluftversorgung einen Kleinturbolader (8) mit einer Welle (2a) sowie einen an der Welle (2a) befestigen Verdichter (V₂) mit einer Zuleitung (3a) und einer Ableitung (4a) und ein an der Welle (2a) befestigtes Turbinenrad (T₂) mit einer Zuleitung (5a) und einer Ableitung (6a) aufweist, wobei die Ableitung (4a) des Verdichters (V₂) des Kleinturboladers (8) direkt mit einem Sperrluftzugang des Turbinenrades (T₁) des Turboladers (1) verbunden ist.

2. Turbolader (1) nach Anspruch 1,
dadurch gekennzeichnet, dass
der Turbolader (1) ein Turbolader veränderlicher Geometrie ist.

3. Turbolader (1) nach Anspruch 1 oder 2,
dadurch gekennzeichnet, dass
die Zuleitung (5a) des Turbinenrades (T₂) des Kleinturboladers (8) von der Zuleitung (5) des Turboladers (T₁) abzweigt und die Ableitung (6a) des Turbinenrades (T₂) des Kleinturboladers (8) in die Ableitung (6) des Turbinenrades (T₁) des Turboladers (1) mündet.

4. Turbolader (1) nach Anspruch 3,
dadurch gekennzeichnet, dass
in der Zuleitung (5a) des Kleinturboladers (T₂) ein druckminderndes Element (7) angeordnet ist.
